# EUROPEAN PATENT SPECIFICATION

(11) **EP 2 353 684 B1**
(45) Date of publication and mention of the grant of the patent: **04.10.2017**
(21) Application number: 10191751.6
(22) Date of filing: 18.11.2010
(51) Int. Cl.: A63H 27/00, B64C 29/00

(54) **VTOL model aircraft**
VTOL-Modellflugzeug
Avion de modèle VTOL (décollage et atterrissage vertical)

(30) Priority: 21.01.2010 CN 201010004074
(43) Date of publication of application: 10.08.2011
(73) Proprietor: GUANGZHOU WALKERA TECHNOLOGY CO., LTD, Yuwotou, Nansha District, Guangzhou, Guangdong (CN)
(72) Inventor: LUO, Zhihong, Guangzhou City, Guangdong (CN)
(74) Representative: McCartney, Jonathan William

(56) References cited:
- EP-A1- 2 062 627
- WO-A1-2006/022654
- WO-A2-2009/095696
- US-A1- 2006 016 930
- US-B1- 6 719 244

## Description

### FIELD OF THE INVENTION

The present invention relates to a toy model aircraft and particularly to a VTOL (vertical take-off and landing) model aircraft having flight characteristics of helicopters and fixed-wing aircrafts.

### BACKGROUND OF THE INVENTION

Helicopters fly through the air by directing the thrust generated by spinning rotors. By changing the climbing power and tilt of the rotors, flight conditions of the helicopter can be maintained or altered. Helicopters provide many advantages over fixed-wing aircraft such as vertical take-off and landing (VTOL), and the ability to hover in the air.

However, the cruising speed is lower and the flight control systems are generally more complex, and some perceive helicopters as being less safe than a fixed-wing aircraft.. On the other hand, a fixed-wing aircraft flies by generating a pressure difference between the upper and lower sides of the airfoils. The trajectory of a fixed-wing aircraft is altered by changing the deflected angles of ailerons, elevators or the rudder. Fixed-wing aircraft have higher cruising speeds and are perceived to be more safe than helicopters, but require a longer take-off distance and cannot hover in the air. In the 1950s and 1960s, some companies in U.S., Canada and Europe developed tilted rotor aircrafts that have advantages of both helicopter and fixed-wing aircraft. Bell helicopter Co. and Boeing helicopter Co. developed a V-22 Osprey multi-purpose aircraft based on the multi-purpose VTOL aircraft R&D plan (JVX plan) released by U.S. Department of Defense. It is one of few successful cases of VTOL aircraft.

V-22 Osprey is also called a tilt-rotor aircraft. It has two rotor tilt system assemblies which are rotatable between the horizontal and vertical positions respectively installed on the wing tips. The wings are similar to the airfoil of a fixed-wing aircraft. When the aircraft is in vertical take-off and landing, the rotor shaft is normal to the ground surface. The aircraft flies like a transverse helicopter, and can also hover in the air, or fly forwards, backwards and sideways. After it has reached a certain flying speed, the rotor shaft can be tilted forwards through ninety degrees into a horizontal condition. In this condition the rotors serve as a regular propeller. In such a condition, the tilted rotor aircraft can fly at a higher speed for longer distances like a regular fixed-wing aircraft. Thus the tilted rotor aircraft is a unique rotor aircraft with capabilities of both the helicopter that can perform vertical take-off and landing and hover in the air, and also with abilities of a turboprop that can fly in high cruising speed. Model aircraft have been developed to imitate the real aircraft. As the V-22 Osprey tilt-rotor aircraft is a novel aircraft different from the conventional helicopter or fixed-wing aircraft, modification of the V-22 Osprey to a model aircraft is a great challenge. At present, most model aircraft imitating the V-22 Osprey merely imitate the profile or provide solely helicopter functionality.

VTOL aircraft using tilting of the rotors the provide the flight characteristics of both helicopters and fixed wing aircraft are already known from the documents US 6719244 and WO 2006022654.

### SUMMARY OF THE INVENTION

The present invention aims to provide a model aircraft that closely emulates the V-22 Osprey with the same flight characteristics but the dimensions of a toy aircraft.

The design of real aircraft must take many factors into account, such as: the fuselage must have space to accommodate a certain number of passengers or cargo, sufficient power must be available to carry the loads and to fly at high speed; the hull must be sealed and be able to withstand high internal pressure at high altitudes; the fuselage has to arrange complex electric control circuits and wiring, etc. However, a model aircraft does not need to consider these factors. Its casing and frame can be made of light PVC material, and the interior space can be fully used for installing electric or mechanical structures without carrying people or cargo. The engine power merely has to meet the flight requirement. Considering the aforesaid differences of real and model aircraft, the present invention provides a vertical take-off and landing (VTOL) model aircraft, comprising a fuselage, two fixed wings extended outwards from two sides of the fuselage and a tailplane at a tail of the fuselage, wherein each of the two fixed wings includes a propeller unit being coupled with a rotor, characterized in that the two propeller units are coupled with a rotary axle mechanism to form an integrated body connected to the wings, the fuselage containing a rotary axle driving means for rotating the rotary axle mechanism thereby to rotate the propeller units concurrently between vertical and horizontal configurations.

The present invention employs propeller units to replace the turbine engines of the real aircraft. Because the model aircraft has a light weight and does not need to carry people or cargo, the propeller units can provide adequate power to meet requirements of vertical take-off and landing and cruise. The fuselage of the model aircraft also does not need to leave space for accommodating people or cargo, hence the rotary axle driving means can be installed in the fuselage to directly drive the rotary axle mechanism and allow the two propeller units to turn concurrently between the vertical and horizontal configurations. The rotary axle mechanism is located transversely across the fuselage and wings, and provides synchronized mechanical rotation of the propeller units. Compared with the real aircraft that needs to install a rotor tilt system assembly on the distal end of the wing, the present invention provides a much simplified structure without need for a complex electrical control mechanism.

When the propeller units of the model aircraft of the invention are in the vertical condition, the pitch of the propeller can be changed to allow the aircraft to perform vertical take-off and landing, and hover in the air. By changing the tilt direction of the rotor shaft and pitch, the aircraft can fly forwards, backwards, and sideways. When the propeller units are turned to the horizontal condition and the pitch of each propeller unit can be fixed at a selected value, cruising flight can be performed. Thus the model aircraft of the invention emulates the function and operation of a real V-22 Osprey aircraft. By incorporating the characteristics of the model aircraft, the invention simplifies the driving means of the real aircraft with a novel driving structure adapted to the size of the model aircraft which is within 0.5 to 3 meters in length or width. Compared with the conventional model aircraft that partly imitates the V-22 Osprey aircraft or only imitates the profile of V22 Osprey aircraft, the present invention provides a fuller emulation of the design with substantial improvements over existing models. The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 shows a model aircraft in a vertical take-off and landing or hover condition.
FIG. 2 shows the internal structure of the aircraft of FIG. 1.
FIG. 3 shows the aircraft in a cruising flight condition.
FIG. 4 is an enlarged view of a propeller unit of the aircraft.
FIG. 5 is an exploded view of the propeller unit of FIG. 4.
FIG. 6 is an exploded view of the swashplate mechanism of FIG. 5.
FIG. 7A shows the propeller unit according to FIG. 1 in an operating condition.
FIG. 7B is an enlarged view of part of FIG. 7A.
FIG. 8A is an enlarged plan view of a hub system of the propeller unit of FIG. 7A.
FIG. 8B is an enlarged side view of the hub system of FIG 7A.
FIG. 9 is an exploded view of the aircraft as shown in FIG. 3.
FIG. 10 is an enlarged view of a rotary axle mechanism of the aircraft.
FIG. 11 is an exploded view of a linkage bar mechanism of the aircraft.

### DETAILED DESCRIPTION OF THE PREFERRED EMBODIMENT

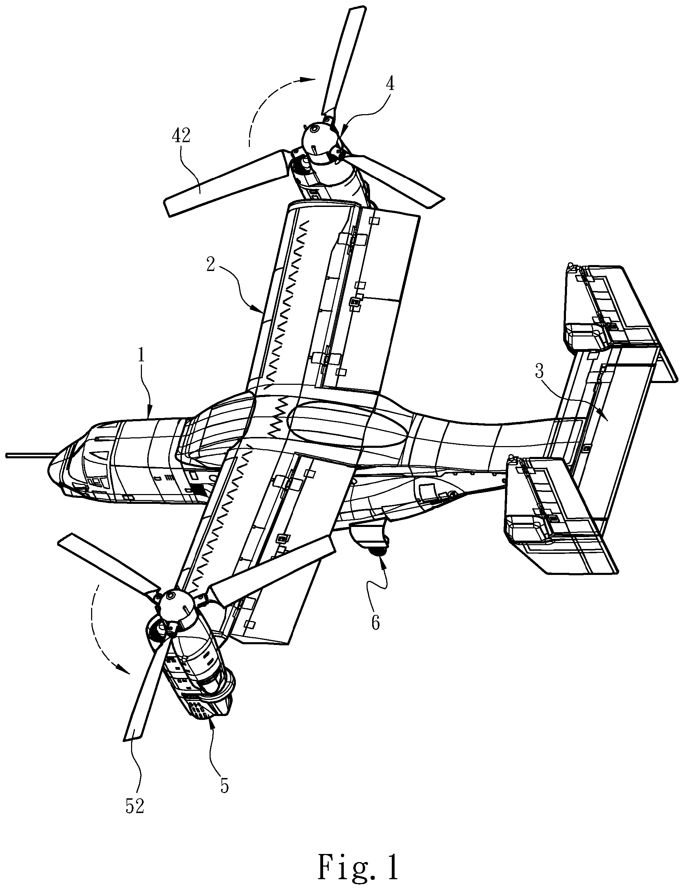

With reference to FIG. 1, the present invention provides a model aircraft which includes a fuselage 1, two fixed wings 2 extended outwards from two sides of the fuselage 1 and a tailplane 3 located at the tail of the fuselage 1. The two wings 2 respectively have propeller units 4 and 5 at their distal end with a rotor 42 and 52 coupled thereon rotating in opposite directions to offset the torque reactions of one another. The aircraft also has wheels 6 respectively located at two sides of the underside of the fuselage 1 and beneath the nose. While the model aircraft is in the configuration for vertical take-off and landing, or hovering shown in FIG. 1, the propeller units 4 and 5 are in a vertical configuration. Viewed from above, the rotor 42 rotates clockwise, and the other rotor 52 rotates counterclockwise as shown by the arrows in the FIG. 1. Rotation of the rotors 42 and 52 generates an upward thrust. By adjusting the rotating pitch of the rotors 42 and 52, the thrust can be adjusted. When the thrust is greater than the force of gravity on the aircraft, the aircraft can take off vertically. When the thrust is equal to the gravity force the aircraft can hover in the air, and when the thrust is smaller than the gravity force the aircraft can be controlled to land steadily.

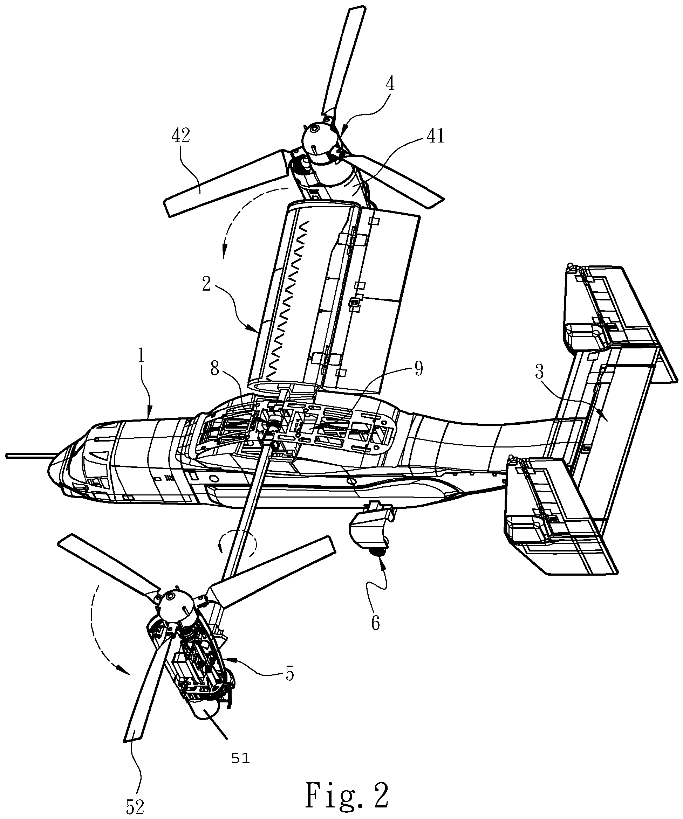

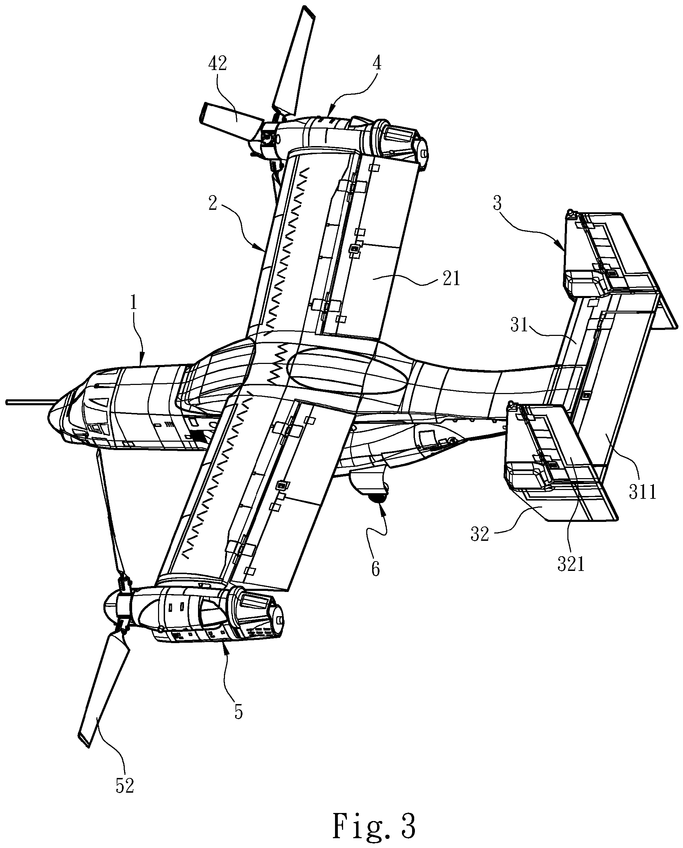

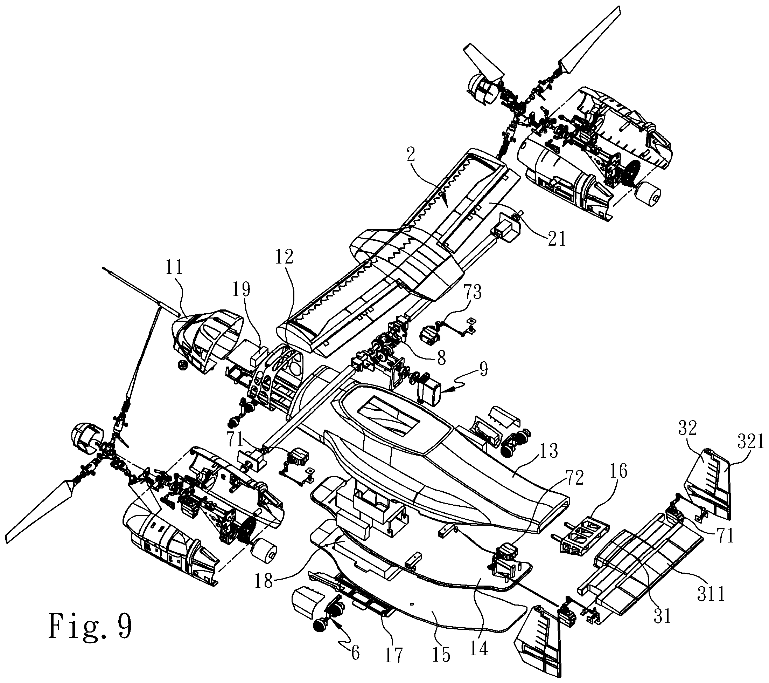

With reference to FIG. 2 depicting the internal structure of the aircraft, the propeller units 4 and 5 include respectively a rotary nacelle 41 and 51 with the rotor 42 and 52 respectively mounted at the front end. The rotary nacelles 41 and 51 hold a driving mechanism and a pitch control means for the rotors 42 and 52 respectively, and are coupled to form an integrated body through a rotary axle mechanism 8 connected to the wings 2. The rotary axle mechanism 8 extends transversely through the fuselage 1 which holds a rotary axle driving means 9 to drive the rotary axle mechanism 8 and thereby to rotate the propeller units 4 and 5 at the two ends thereof concurrently between the vertical and horizontal configurations. The arrows in the drawings indicate rotation of the propeller units 4 and 5 from the vertical to the horizontal configuration. When the propeller units 4 and 5 are rotated to the horizontal configuration as shown in FIG. 3, the aircraft is in a cruising flight condition, and the rotors 42 and 52 are latched at a selected pitch. The thrust generated by the rotation is a forward thrust force in the horizontal condition that allows the aircraft to fly in the cruising flight condition. In such a condition, like an ordinary fixed-wing model aircraft, flight condition is controlled through ailerons, an elevator and rudders. As shown in the drawings, an aileron 21 is located at the rear edge of each fixed wing 2 to control transverse manipulation of the aircraft. The tailplane 3 includes a horizontal tail 31 and vertical tails 32 at two ends of the horizontal tail 31. The horizontal tail 31 has an elevator 311 at an upper rear edge. The two vertical tails 32 respectively have a rudder 321 at a rear edge. The ailerons 21, elevator 311 and rudders 321 are controlled respectively through independent cruising control steering motors 73, 72 and 71 (FIG. 9).

In addition to the vertical and horizontal configurations of the propeller units mentioned above, the propeller units 4 and 5 also can be rotated to a selected angle relative to the vertical direction, such as between 10° and 80° in the forward or reverse direction, and the pitch of the rotors 42 and 52 can be adjusted to generate the thrust as desired to achieve forward or backward motion of the aircraft.

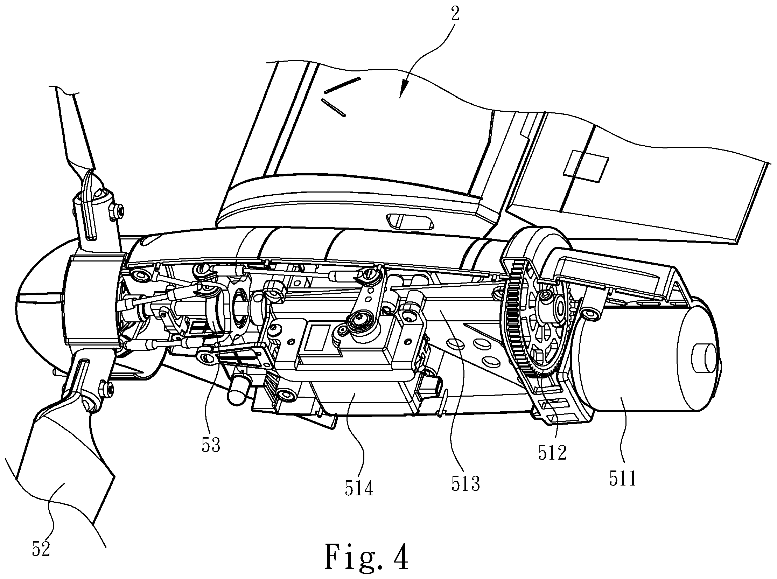

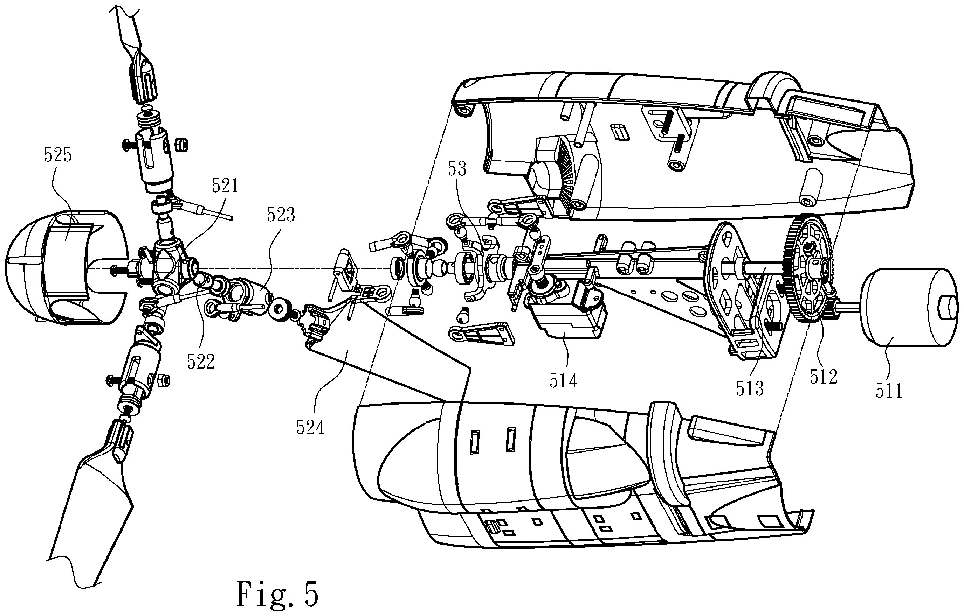

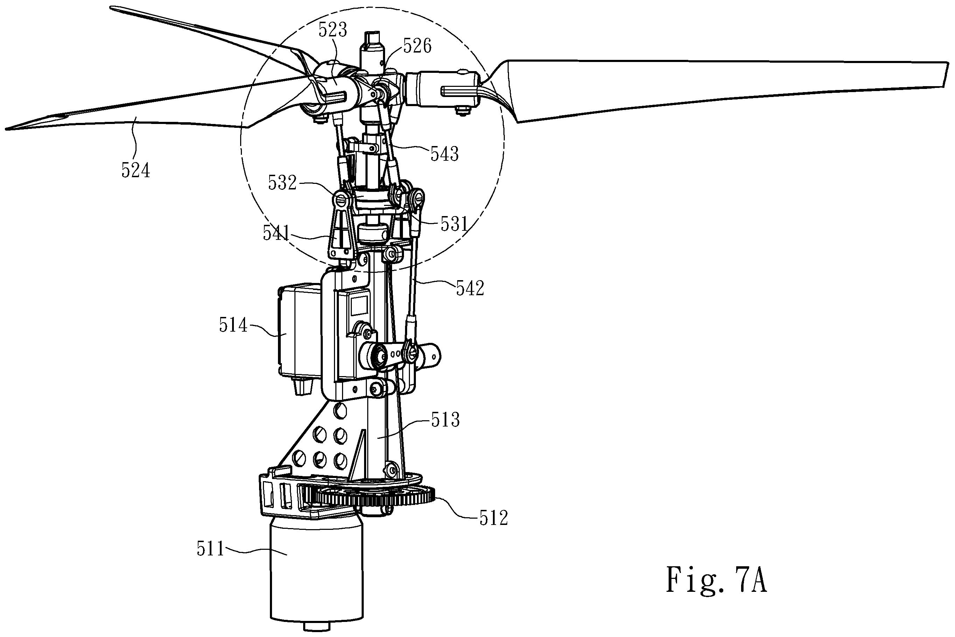

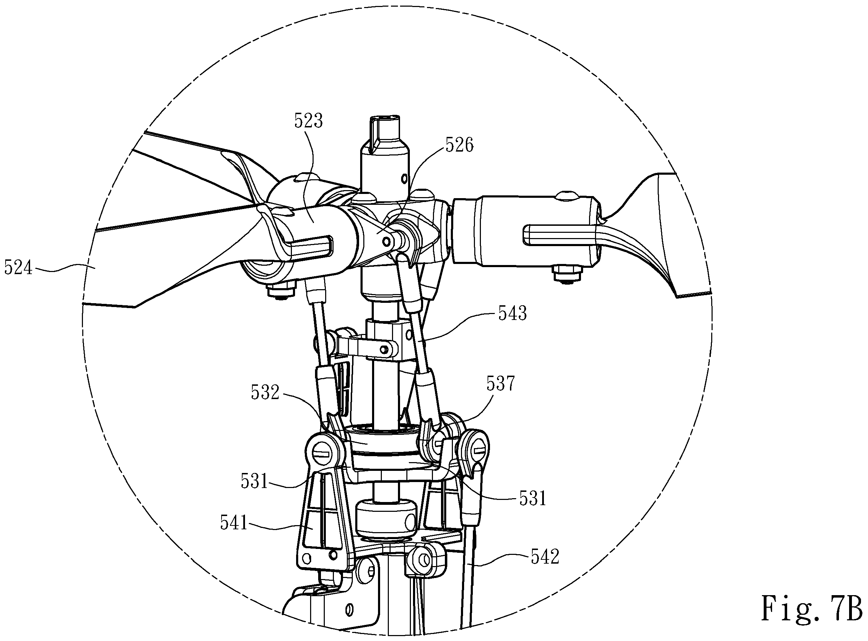

With reference to FIGS. 4 and 5 showing the detailed structure of the propeller unit, the propeller unit 5 is taken for illustrative purposes. The propeller unit 5 includes the rotary nacelle 51 and rotor 52 at the front end of the rotary nacelle 51. The rotor 52 includes a central hub 521, three rotor blades 524 (FIG. 7A and 7B) and three blade clips 523 which are coupled with the central hub 521 through three radial rotary shafts 522 which are evenly spaced around the central hub 521. Each blade clip 523 has a front end clamping one rotor blade 524 and is rotatable about the radial rotary shaft 522 to alter the pitch of the rotor blade 524. The central hub 521 also has a rotor shaft 513 extending through the rotary nacelle 51. The driving mechanism within the rotary nacelle 51 includes a motor 511 and a gear set 512, and is installed on a distal end of the rotor shaft 513, i.e. the end away from the rotor 52. The pitch control means includes a pitch control steering motor 514, a swashplate 53 and a plurality of pulling rods, and is mounted at a position along the rotor shaft 513.

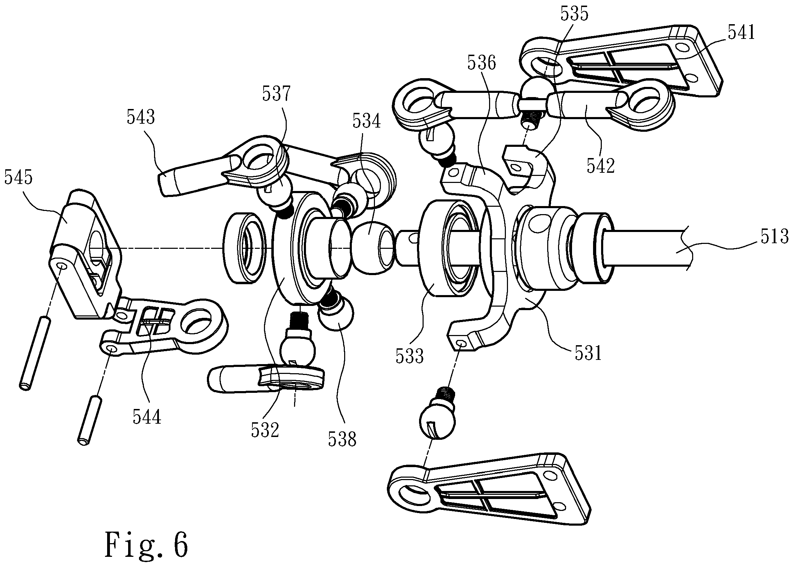

Referring to FIG. 6, the swashplate 53 includes an upper plate 532 and a lower plate 531 that are interposed by a coil spring or bearing 533 to connect with the rotor shaft 513 through a spherical hinge 534 in an inclined manner. The coil spring 533 is wedged among the upper plate 532, lower plate 531 and spherical hinge 534. The lower plate 531 has two rotatable nodes 535 directly opposite one another defining an axis for rotation of the swashplate 53, and a tilt control node 536 perpendicular to this axis. The rotatable nodes 535 are mounted on a rotary seat consisting of two bracing plates 541. The tilt control node 536 is connected to the pitch control steering motor 514 through a lower pulling rod 542. The upper plate 532 has a number of evenly spaced pitch control nodes 537 mounted on the periphery of the plate equal to the number of rotor blades. The blade clip 523 has an eccentric control end 526 on one side. Each pitch control node 537 is connected to an eccentric control end 526 of a blade clip through an upper pulling rod 543. Refer to FIG. 7A and 7B for the assembly and coupling structure.

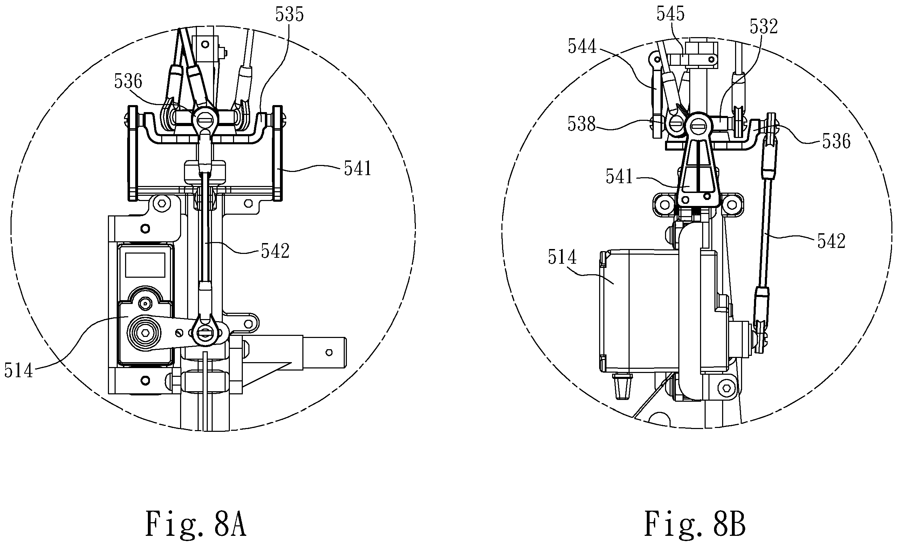

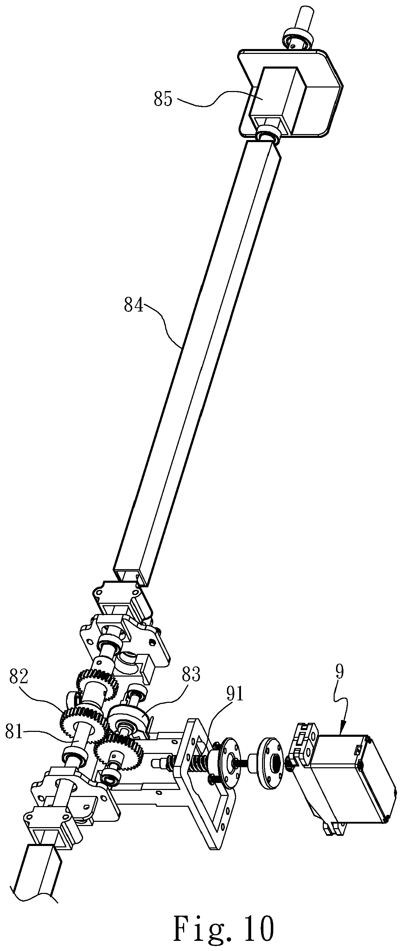

The motor 511 drives the rotor shaft 513 to rotate through the gear set 512, and the rotor shaft 513 further drives the three rotor blades 524 at the proximal end thereof to rotate to provide power for take-off, landing, hover and cruising of the aircraft. When the propeller units 4 and 5 are not in the horizontal condition, i.e. during take-off, landing, forward, backward or sideways flight, the pitch of the propeller units 4 and 5 has to be changed to adjust the thrust of the propeller units to oppose the force of gravity and such that the flight condition of the aircraft may be altered. Alteration of the pitch of the propeller units is controlled through the pitch control steering motor 514 as shown in FIG. 7A. The pitch control steering motor 514 pulls the lower plate 531 braced by the bracing plate 541 through the lower pulling rod 542 as shown in FIG. 8A. The lower plate 531 is tilted to drive the upper plate 532 to tilt also, and the upper plate 532 pulls the eccentric control end 526 on the one side of the blade clip 523 through the upper pulling rod 543 to change the pitch of the rotor blade 524 clamped by the blade clip 523. When the pitch control steering motor 514 is operated to effect a tilt in the swashplate 53, the pitch of the rotor blades is cyclically adjusted and the pitch of an individual blade therefore depends on the tilt of the swashplate and the azimuthal position of the blade. When the propeller units 4 and 5 are in the horizontal condition, i.e. the aircraft is in the cruising flight condition, the pitch control steering motor 514 controls the pitch of the rotor blade 524 at a selected value without cyclical variation. To ensure that the upper plate 532 is tilted upwards only in one direction, the invention further provides a positioning node 538 on the periphery of the upper plate 532 that performs a similar function to the tilt control node 536 of the lower plate. The positioning node 538 is coupled on the rotor shaft 513 through an anchor seat turnable synchronously with the rotor shaft 513. The anchor seat includes a coupling member 544 and a holding clip 545 that are coupled via a hinge. The assembled structure is shown in FIG. 8B. The anchor seat connects the upper plate 532 for rotation with the rotor shaft 513 while permitting it to follow tilting movement of the lower plate 531. Refer to FIG. 9 for the exploded view of the invention. The fuselage 1 includes a main body consisting of an upper structure 13, a middle structure 14 and a lower structure 15. The main body has a front end coupled with a nose casing 11 through a front frame 12, and a rear end coupled with the tailplane 3 through a rear frame 16. The lower structure 15 has a battery box 18 with a cover 17. The nose casing 11 holds a wireless receiving module 19 and its related circuit structures. The rotary axle mechanism 8 and rotary axle driving means 9 are installed on the middle structure 14. A detailed exploded assembly of the rotary axle mechanism 8 and rotary axle driving means 9 can be seen in FIG. 10. The rotary axle mechanism 8 includes a rotary axle 81 transversely positioned within the two fixed wings 2, a gear set 82 disposed between the wings connecting the rotary axle mechanism 8 and the rotary axle driving means 9, and a bracing tube 84 to support rotation of the rotary axle 81. The rotary axle 81 has two bearings 85 at two ends. The gear set 82 has a potentiometer 83 located thereon to measure turning angle of the rotary axle 81. When the angle of the propeller units 4 and 5 is to be changed, the rotary axle driving means 9 drives a worm screw 91 to rotate, which then drives the rotary axle 81 to rotate through the gear set 82, and therefore the angle of the propeller units 4 and 5 is adjusted. The potentiometer 83 can accurately measure the rotation angle of the rotary axle 81. The measured rotation angle is fed back to a control circuit to control the rotary axle driving means 9 to precisely position the rotation angle of the propeller units 4 and 5.

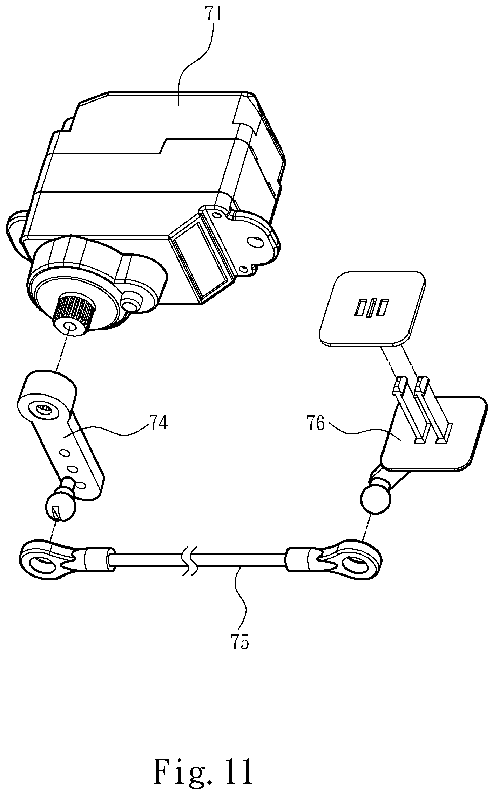

The cruising control steering motors 73, 72 and 71 are connected to the ailerons 21, elevator 311 and rudders 321 through individual linkage bar mechanisms shown in FIG. 11. Each linkage bar mechanism includes a swing bar 74, an extended pulling rod 75 and a clip sheet 76. The extended pulling rod 75 has two ends, one end is coupled with the clip sheet 76 and another end is coupled with the distal end of the swing bar 74 through spherical hinges. The proximal end of swing bar 74 is connected to the cruising control steering motor. The clip sheet 76 is connected to the aileron 21, elevator 311 or rudder 321 respectively. The aforesaid structure controls the trajectory of the aircraft during cruising flight.

## Claims

1. A vertical take-off and landing model aircraft, comprising a fuselage (1), two fixed wings (2) extended outwards from two sides of the fuselage (1) and a tailplane (3) at a tail of the fuselage (1),
wherein each of the two fixed wings (2) includes a propeller unit (4, 5) at a distal end, each propeller unit (4, 5) being coupled with a rotor (42, 52), whereby the two propeller units (4, 5) are coupled with a rotary axle mechanism (8) to form an integrated body connected to the wings (2), the fuselage (1) containing a rotary axle driving means (9) for rotating the rotary axle mechanism (8) thereby to rotate the propeller units (4, 5) concurrently between vertical and horizontal configurations;
wherein each propeller unit (5) includes a rotary nacelle (51) and a rotor (52) at the front end of the rotary nacelle(51), the rotary nacelle (51) holding a driving mechanism and a pitch control means (514) for the rotor (52); whereby the rotor (52) includes a central hub (521) and at least three rotor blades (524); **characterised in that** the rotor (52) further includes a plurality of blade clips (523) equal to the number of the rotor blades (524), the blade clips (523) being coupled with the central hub (521) through radial rotary shafts (513) at evenly spaced azimuthal positions on the central hub (521) to retain the rotor blades (524) and to adjust their pitch; the central hub (521) comprising a rotor shaft (513) extended into the rotary nacelle (51), a driving mechanism within the nacelle (51) comprising a motor (511) and a gear set (512) located on a distal end of the rotor shaft (513); a pitch control means comprising a pitch control steering motor (514), a swashplate (53) and a plurality of pulling rods mounted (542, 543) on the rotor shaft (513).

2. A vertical take-off and landing model aircraft as claimed in claim 1, **characterized in that** the swashplate (53) includes an upper plate (532) and a lower plate (531) that are coupled with the rotor shaft (513) through a spherical hinge (534) in the center in a manner to allow the swashplate (53) to be tilted with respect to the shaft (513), the lower plate (531) comprising two rotatable nodes (535) on the periphery located at opposite azimuthal positions about the shaft (513) and a tilt control node (536) disposed at an intermediate azimuthal position of the two rotatable nodes (535), the rotatable nodes (535) being supported by a rotary seat (541), the tilt control node (536) being coupled with the pitch control steering motor (514) through a lower pulling rod (542); the upper plate (532) comprising a plurality of pitch control nodes (537) at evenly spaced azimuthal positions on the periphery thereof equal to the number of rotor blades (524); the blade clip (523) including an eccentric control end on one side (526); each pitch control node (537) being connected to the eccentric control end (526) of a blade clip (523) through upper pulling rods (543).

3. A vertical take-off and landing model aircraft as claimed in claim 2, **characterized in that** the upper plate (532) includes a positioning node (538) on the periphery, the positioning node (538) being coupled to the rotor shaft (513) through an anchor seat (544, 545) which is rotatable synchronously with the rotor shaft (513), the anchor seat (544, 545) confining the upper plate (532) from tilting to left and right sides.

4. The A vertical take-off and landing model aircraft as claimed in any one of the preceding claims, **characterized in that** the rotary axle mechanism (8) includes a rotary axle (81), a bracing tube (84) coupled on two sides of the rotary axle (81) to support rotation of the rotary axle (81), the rotary axle (81) running transversely through the two fixed wings (2) of the aircraft, and a rotary axle driving means (9) comprising a gear set (82) located at a position along the rotary axle (81) and engaging the rotary axle (81).

5. A vertical take-off and landing model aircraft as claimed in claim 4, **characterized in that** the gear set (82) includes a potentiometer (83) to measure the rotation angle of the rotary axle (81).

6. A vertical take-off and landing model aircraft as claimed in any of the preceding claims, **characterized in that** each fixed wing (2) includes an aileron (21) at a rear edge thereof to control transverse manipulation of the aircraft, the tailplane (3) comprising a horizontal tail (31) and vertical tails (32) at two ends of the horizontal tail (31), the horizontal tail (31) comprising an elevator (311), each vertical tail (32) respectively comprising a rudder (321) at its rear edge; the ailerons (21), the elevator (311) and the rudders (321) being controlled by respective cruising flight control steering motors (73, 72, 71).

7. A vertical take-off and landing model aircraft as claimed in claim 6, **characterized in that** the cruising flight control steering motors (73, 72, 71) are connected to the ailerons (21), the elevator (311) and the rudders (321) through respective linkage bar mechanisms, each linkage bar mechanism comprising a swing bar (74), an extended pulling rod (75) and a clip sheet (76), the extended pulling rod (75) comprising two ends coupled respectively with one end of the clip sheet (76) and one end of the swing bar (74) through spherical hinges, the swing bar (74) comprising another end connected to the cruising flight control steering motor (73, 72, 71), the clip sheet being connected to the aileron (21), the elevator (311) or the rudder (321).

8. A vertical take-off and landing model aircraft as claimed in any of the preceding claims, **characterized in that** the two rotors (42, 52) rotate in opposite directions.

## Patentansprüche

1. Ein senkrecht startendes und landendes Modellflugzeug mit einem Rumpf (1), zwei starren Flügeln (2), die sich von zwei Seiten des Rumpfes (1) aus nach außen erstrecken und einer am Heck des Rumpfes (1) angebrachten Höhenflosse (3),
wobei jeder der beiden starren Flügel (2) am äußeren Ende eine Propellereinheit (4, 5) aufweist und jede Propellereinheit (4, 5) mit einem Rotor (42, 52) gekoppelt ist, wobei die beiden Propellereinheiten (4, 5) mit einem Drehachsenmechanismus (8) gekoppelt sind und einen mit den Flügeln (2) verbundenen integrierten Körper bilden, wobei der Rumpf (1) eine Drehachsantriebseinrichtung (9) zum Drehen des Drehachsenmechanismus (8) enthält, um die Propellereinheiten (4, 5) gleichzeitig zwischen vertikalen und horizontalen Konfigurationen zu drehen;
wobei jede Propellereinheit (5) eine Rotationsgondel (51) und einen Rotor (52) an der Stirnseite der Rotationsgondel (51) aufweist und die Rotationsgondel (51) einen Antriebsmechanismus und eine Anstellwinkel-Steuereinrichtung (514) für den Rotor (52) enthält;
wobei der Rotor (52) eine zentrale Nabe (521) und mindestens drei Rotorblätter (524) aufweist; wobei diese **dadurch gekennzeichnet sind, dass** der Rotor (52) eine Vielzahl von Rotorblattklemmen (523) aufweist, die der Anzahl der Rotorblätter (524) entsprechen und die Rotorblattklemmen (523) mit der zentralen Nabe (521) über radiale Drehwellen (513) an gleichmäßig beabstandeten azimutalen Positionen mit der zentralen Nabe (521) gekoppelt sind, um die Rotorblätter (524) zu halten und ihren Anstellwinkel einzustellen; wobei die zentrale Nabe (521) eine Rotorwelle (513) aufweist, die sich in die Rotationsgondel (51) erstreckt und ein Antriebsmechanismus innerhalb der Gondel (51) einen Motor (511) und einen Zahnradsatz (512) aufweist, der an einem distalen Ende der Rotorwelle (513) angebracht ist; wobei die Anstellwinkel-Steuereinrichtung einen Anstellwinkel-Steuerungsmotor (514), eine Taumelscheibe (53) und eine Vielzahl von an der Rotorwelle (513) montierten Zugstangen (542, 543) aufweist.

2. Ein senkrecht startendes und landendes Modellflugzeug gemäß Anspruch 1, welches **dadurch gekennzeichnet ist, dass** die Taumelscheibe (53) eine obere Platte (532) und eine untere Platte (531) aufweist, die in der Mitte mit der Rotorwelle (513) über ein kugelförmiges Gelenk (534) so verbunden sind, dass die Taumelscheibe (53) in Bezug auf die Welle (513) gekippt werden kann, wobei die untere Platte (531) an ihrem Umfang an sich gegenüberliegenden azimutalen Positionen um die Welle (513) herum zwei drehbare Knoten (535) und einen Kippsteuerknoten (536) aufweist, der an einer mittleren azimutalen Position zwischen den beiden drehbaren Knoten (535) angeordnet ist, wobei die drehbaren Knoten (535) von einem Drehsitz (541) getragen werden, der Anstellwinkel-Steuerknoten (536) mit dem Anstellwinkel-Steuerungsmotor (514) über eine untere Zugstange (542) gekoppelt ist; wobei die obere Platte (532) an deren Umfang an gleichmäßig beabstandeten azimutalen Positionen eine Vielzahl von Anstellwinkel-Steuerknoten (537) aufweist, die der Anzahl der Rotorblätter (524) entsprechen; wobei eine Rotorblattklemme (523) auf einer Seite (526) ein exzentrisches Steuerende aufweist; wobei jeder Anstellwinkel-Steuerknoten (537) mit dem exzentrischen Steuerende (526) einer Rotorblattklemme (523) über eine obere Zugstange (543) verbunden ist.

3. Ein senkrecht startendes und landendes Modellflugzeug gemäß Anspruch 2, welches **dadurch gekennzeichnet ist, dass** die obere Platte an ihrem Umfang (532) einen Positionierungsknoten (538) aufweist, wobei der Positionierungsknoten (538) mit der Rotorwelle (513) über einen mit der Rotorwelle (513) synchron drehbaren Ankersitz (544, 545) verbunden ist und der Ankersitz (544, 545) die Kippneigung der oberen Platte (532) nach links und rechts begrenzt.

4. Ein senkrecht startendes und landendes Modellflugzeug gemäß einem der vorhergehenden Ansprüche, welches **dadurch gekennzeichnet ist, dass** der Drehachsenmechanismus (8) eine Drehachse (81) und ein an zwei Seiten mit der Drehachse (81) gekoppeltes Stützrohr (84) aufweist, um die Drehung der Drehachse (81) zu stützen, die Drehachse (81) quer durch die beiden starren Flügel (2) des Flugzeugs verläuft und eine Drehachsantriebseinrichtung (9) aufweist, die einen Zahnradsatz (82) enthält, der sich an einer Position entlang der Drehachse (81) befindet und in die Drehachse (81) eingreift.

5. Ein senkrecht startendes und landendes Modellflugzeug gemäß Anspruch 4, welches **dadurch gekennzeichnet, dass** der Zahnradsatz (82) ein Potentiometer (83) zur Messung des Drehwinkels der Drehachse (81) aufweist.

6. Ein senkrecht startendes und landendes Modellflugzeug gemäß einem der vorhergehenden Ansprüche, welches **dadurch gekennzeichnet ist, dass** jeder starre Flügel (2) an seiner Hinterkante ein Querruder (21) aufweist, um die Quermanipulation des Flugzeugs zu steuern, die Höhenflosse (3) ein horizontales Ende (31) und an zwei Enden des horizontalen Endes (31) vertikale Enden (32) aufweist, wobei das horizontale Ende (31) ein Höhenruder (311) und jedes vertikale Ende (32) an deren Hinterkante ein Seitenruder (321) aufweisen; wobei die Querruder (21), das Höhenruder (311) und die Seitenruder (321) über entsprechende Flugsteuerungsmotoren (73, 72, 71) gesteuert werden.

7. Ein senkrecht startendes und landendes Modellflugzeug gemäß Anspruch 6, welches **dadurch gekennzeichnet ist, dass** die Flugsteuerungsmotoren (73, 72, 71) mit den Querrudern (21), dem Höhenruder (311) und den Seitenrudern (321) über entsprechende Verbindungsgestänge verbunden sind und jedes Verbindungsgestänge eine Drehstange (74), eine verlängerte Zugstange (75) und eine Klemmenplatte (76) aufweist, die verlängerte Zugstange (75) über zwei Enden verfügt, die über kugelförmige Gelenke an einem Ende mit der Klemmenplatte (76) und am anderen Ende mit der Drehstange (74) verbunden sind, wobei die Drehstange (74) ein weiteres Ende aufweist, das mit den Flugsteuerungsmotoren (73, 72, 71) verbunden ist, wobei die Klemmenplatte mit dem Querruder (21), dem Höhenruder (311) oder dem Seitenruder (321) verbunden ist.

8. Ein senkrecht startendes und landendes Modellflugzeug gemäß einem der vorhergehenden Ansprüche, welches **dadurch gekennzeichnet ist, dass** sich die beiden Rotoren (42, 52) in entgegengesetzten Richtungen drehen.

## Revendications

1. Un avion modèle de décollage et d'atterrissage vertical, comprenant un fuselage (1), deux ailes fixes (2) s'étendent vers l'extérieur depuis deux côtés du fuselage (1) et un plan arrière (3) à la queue du fuselage (1),
dans lequel chacune des deux ailes fixes (2) comprend une unité d'hélice (4, 5) à une extrémité distale, chaque unité d'hélice (4, 5) étant couplée à un rotor (42, 52), les deux unités d'hélice (4 , 5) sont couplées à un mécanisme d'essieu rotatif (8) pour former un corps intégré relié aux ailes (2), le fuselage (1) contenant un moyen d'entraînement d'essieu rotatif (9) pour faire tourner le mécanisme à essieu rotatif (8) et donc faire tourner les unités d'hélice (4, 5) simultanément entre les configurations verticales et horizontales ;
dans lequel chaque unité d'hélice (5) comprend une nacelle rotative (51) et un rotor (52) à l'extrémité avant de la nacelle rotative (51), la nacelle rotative (51) tenant un mécanisme d'entraînement et un moyen de commande de hauteur (514) pour le rotor (52) ;
si bien que le rotor (52) comprend un moyeu central (521) et au moins trois pales de rotor (524) ; **caractérisé en ce que** le rotor (52) comprend davantage une pluralité d'attaches de pale (523) égales au nombre des pales de rotor (524), les attaches de pale (523) étant couplées au moyeu central (521) par des arbres rotatifs radiaux (513) à des positions azimutales uniformément espacées sur le moyeu central (521) pour retenir les pales de rotor (524) et pour régler leur hauteur ; le moyeu central (521) comprend un arbre de rotor (513) s'étendant dans la nacelle rotative (51), un mécanisme d'entraînement à l'intérieur de la nacelle (51) comprenant un moteur (511) et un ensemble d'engrenages (512) situé sur une extrémité distale de l'arbre de rotor (513) ; un moyen de commande de pas comprenant un moteur de direction de contrôle de pas (514), un plateau cyclique (53) et une pluralité de tiges de traction montées (542, 543) sur l'arbre de rotor (513).

2. Un avion modèle de décollage et atterrissage vertical selon la revendication 1, **caractérisé en ce que** le plateau cyclique (53) comprend une plaque supérieure (532) et une plaque inférieure (531) qui sont couplées à l'arbre de rotor (513) à travers une charnière sphérique (534) au centre de manière à favoriser l'inclination du plateau cyclique (53) au regard de l'arbre (513), la plaque inférieure (531) comprenant deux noeuds rotatifs (535) situés à l'opposé des positions azimutales autour de l'arbre (513) et un noeud de commande d'inclinaison (536) disposé à une position azimutale intermédiaire des deux noeuds rotatifs (535), les noeuds rotatifs (535) étant supportés par un siège rotatif (541), la commande d'inclinaison ; le noeud (536) étant couplé au moteur de direction de commande de hauteur (514) à travers une tige de traction inférieure (542) ; la plaque supérieure (532) comprenant une pluralité de noeuds de commande de pas (537) à des positions azimutales uniformément espacées sur la périphérie de celle-ci, égal au nombre de pales de rotor (524) ; la pince (523) comprenant une extrémité de commande excentrique d'un côté (526) ;
chaque noeud de commande de pas (537) étant relié à l'extrémité de commande excentrée (526) d'une pince à lame (523) à travers des tiges de traction supérieures (543).

3. Un avion modèle de décollage et atterrissage vertical selon la revendication 2, **caractérisé en ce que** la plaque supérieure (532) comprend un noeud de positionnement (538) sur la périphérie, le noeud de positionnement (538) étant couplé à l'arbre de rotor (513) à travers un siège d'ancrage (544, 545) qui peut tourner en synchronisme avec l'arbre de rotor (513), le siège d'ancrage (544, 545) confinant la plaque supérieure (532) de basculement vers les côtés gauche et droit.

4. L'avion modèle de décollage et atterrissage vertical A tel que revendiqué dans l'une quelconque des revendications précédentes, **caractérisé en ce que** le mécanisme de l'essieu rotatif (8) comprend un axe rotatif (81), un tube de renforcement (84) couplé sur deux côtés de l'essieu rotatif (81) pour supporter la rotation de l'axe rotatif (81) l'essieu rotatif (81) s'étendant transversalement à travers les deux ailes fixes (2) de l'aéronef et un moyen d'entraînement d'essieu rotatif (9) comprenant un ensemble d'engrenages (82) situé dans une position le long de l'essieu rotatif (81) et engageant l'essieu du rotor (81).

5. Un avion modèle de décollage et d'atterrissage vertical selon la revendication 4, **caractérisé en ce que** l'ensemble d'engrenages (82) comprend un potentiomètre (83) pour mesurer l'angle de rotation de l'essieu rotatif (81).

6. Un avion modèle de décollage et d'atterrissage vertical tel que revendiqué dans l'une quelconque des revendications précédentes, **caractérisé en ce que** chaque aile fixe (2) comprend un aileron (21) à son bord arrière pour contrôler la manipulation transversale de l'aéronef, l'avion de queue (3) comprenant une queue horizontale (31) et des queues verticales (32) à deux extrémités de la queue horizontale (31), la queue horizontale (31) comprenant un ascenseur (311), chaque queue verticale (32) comprenant respectivement un gouvernail (321) à son bord arrière ; les ailerons (21), l'ascenseur (311) et les gouvernails (321) étant commandés par des moteurs de direction de commande de vol de croisement respectifs (73, 72, 71).

7. Un avion modèle de décollage et d'atterrissage vertical selon la revendication 6, **caractérisé en ce que** les moteurs de direction de commande de vol de croisière (73, 72, 71) sont reliés aux ailerons (21), à l'ascenseur (311) et aux gouvernails (321) à travers des mécanismes de barre de liaison respectifs, chaque mécanisme de barre de liaison comprenant une barre oscillante (74), une tige de traction étendue (75) et une feuille de pince (76), la tige de traction étendue (75) comprenant deux extrémités couplées respectivement avec une extrémité de la feuille de pince (76) et une extrémité de la barre oscillante (74) à travers des charnières sphériques, la barre oscillante (74) comprenant une autre extrémité reliée au moteur de direction de commande de vol de croisière (73, 72, 71), la feuille de pince étant connectée à l'aileron (21), à l'ascenseur (311) ou au gouvernail (321).

8. Un avion modèle de décollage et d'atterrissage vertical selon l'une quelconque des revendications précédentes, **caractérisé en ce que** les deux rotors (42, 52) tournent dans des directions opposées.
